Europäisches Patentamt

European Patent Office

Office européen des brevets

(19)

(11) **EP 0 918 942 B1**

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(21) Anmeldenummer: **97942861.2**

(22) Anmeldetag: **14.08.1997**

(51) Int Cl.⁷: $F16B\ 23/00$, B25B 13/06

(86) Internationale Anmeldenummer:
**PCT/EP97/04447**

(87) Internationale Veröffentlichungsnummer:
**WO 98/007995 (26.02.1998 Gazette 1998/08)**

(54) **KRAFTANGRIFF ZUR DREHMOMENTÜBERTRAGUNG**

FORCE APPLICATION ELEMENT FOR THE TRANSMISSION OF A TORQUE

DISPOSITIF D'APPLICATION DE FORCE POUR LA TRANSMISSION D'UN COUPLE DE ROTATION

(84) Benannte Vertragsstaaten:
**AT DE ES FR GB IT NL PT SE**

(30) Priorität: **16.08.1996 DE 29614216 U**

(43) Veröffentlichungstag der Anmeldung:
**02.06.1999 Patentblatt 1999/22**

(73) Patentinhaber: **Hagedorn, Klaus**
**58097 Hagen (DE)**

(72) Erfinder: **Hagedorn, Klaus**
**58097 Hagen (DE)**

(74) Vertreter: **Zapf, Christoph, Dipl.-Ing.**
**Patentanwälte Dr. Solf und Zapf**
**Postfach 13 01 13**
**42028 Wuppertal (DE)**

(56) Entgegenhaltungen:
**DE-A- 2 443 719          DE-A- 4 321 325**
**GB-A- 2 061 439          US-A- 4 930 378**

**Beschreibung**

Die Erfindung betrifft einen Kraftangriff zur Drehmomentübertragung, bestehend aus mindestens zwei, an einer Axialkontur, wie in einem axialen Loch eines Maschinenelementes liegenden Angriffsflächen für ein Werkzeug, die zum Zusammenwirken mit jeweils einer ebenen Arbeitsfläche des mehrere Kanten aufweisenden Werkzeugs bestimmt sind, wobei mindestens eine Angriffsfläche des Maschinenelementes eine derartige konvexe Krümmung besitzt, daß beim Verdrehen des Werkzeugs um seine Längsachse unter der Wirkung des zu übertragenden Drehmomentes die Querschnittskontur mindestens einer Arbeitsfläche die Querschnittskontur der Angriffsfläche außerhalb des Bereichs der Kanten des Werkzeugs mindestens tangential berührt, wobei im wesentlichen ein Kontakt Zylinder gegen Ebene auftritt, bei dem der Zylinder durch die Angriffsfläche des Maschinenelementes und die Ebene durch die Arbeitsfläche des Werkzeugs gebildet sind.

Ein solcher Kraftangriff kann bei unterschiedlichen Maschinenelementen, z.B. bei Verbindungselementen, wie Schrauben, vorgesehen sein. Die zur Drehmomentübertragung zum Anziehen oder Lösen von Schrauben benutzten Schlüssel unterliegen hinsichtlich ihrer Schaftdurchmesser und Kantennennmaße der Normung (DIN 911). Die Werkzeuge sind im allgemeinen aus einem härteren Material als die Maschinenelemente gefertigt. Insbesondere kommen entsprechend der Ausbildung der Lochkontur der Maschinenelemente Werkzeug-Zwei-, -Vier- und -Sechskante zur Anwendung. Dabei ist es auch bekannt, mehrkantige Werkzeuge einzusetzen, deren Kanten abgerundet sind. Bei der Drehmomentübertragung auf das Maschinenelement kommt es zum Auftreten von Schubspannungen innerhalb des Werkzeugs und des Maschinenelementes und zu einer Flächenpressung zwischen den Arbeitsflächen des Werkzeugs und den Angriffsflächen des Maschinenelementes. Die dabei an der Kontaktstelle auftretende Abplattung ist entsprechend der Größe des Radius des Werkzeuges an seiner Kante nur gering, so daß sich die auftretenden Spannungen auf eine nur sehr kleine Fläche konzentrieren, wodurch in erheblichem Umfang Beschädigungen an den Werkzeugangriffsflächen im Loch der Schraube auftreten. Dies ist auch durch den bedeutenden Einfluß der Fertigungstoleranzen des Werkzeugs auf eine Länge der sich ausbildenden Kontaktzone bedingt. So konnte gezeigt werden, daß die Kontaktlänge mit zunehmender Abweichung vom Nennmaß sehr stark abnimmt, da sich das Werkzeug im Loch der Schraube stärker verkantet.

Die Patentschrift US-A-4 930 378 beschreibt einen Schraubenschlüssel mit einer im Querschnitt polygonalen (in der Grundform sechs- bzw. zwölfeckigen) Einsecköffnung, bei dem die Oberflächenausbildung der Arbeitsfläche von der bekannten ebenen Ausbildung der Arbeitsfläche eines Werkzeugs abweicht. Der Schlüssel umfaßt eine Öffnung mit kreisbogenförmig gekrümmten Anlageflächen, die einander zugeordnete Paare von ebenen Flächen verbinden. In einer Ausführungsform mit einer in der Grundform sechseckigen Kontur der Einsecköffnung besitzt der Schlüssel dabei sechs in Umfangsrichtung ebene Oberflächen und sechs Paare winklig ausgerichteter ebener Oberflächen. Eine gekrümmte Anlagefläche verbindet jeweils eine in Umfangsrichtung ebene Oberfläche mit einer ebenen Fläche eines Paares der winklig ausgerichteten Flächen. In einer anderen Ausführungsform mit einer in der Grundform zwölfeckigen Kontur der Einsecköffnung besitzt der Schlüssel zwölf Paare winklig ausgerichteter ebener Oberflächen, die jeweils durch die gekrümmten Anlageflächen verbunden sind. Außerdem sind Verbindungsflächen vorgesehen, die jeweils die Flächen eines Paares der winklig ausgerichteten ebenen Flächen verbinden und die ebenfalls gekrümmt sein können. Für die auftretenden Radien an den Anlageflächen bzw. an den Verbindungsflächen sind bevorzugte Größenverhältnisse in Bezug auf die Schlüsselweite angegeben. An den kreisbogenförmig gekrümmten Anlageflächen kommt beim Schraubvorgang ein konventionelles, Toleranzen aufweisendes sechskantiges Befestigungselement zur Anlage, ohne daß dabei eine Anlage der ebenen Flächen an dem Befestigungselement eintritt. Dadurch, daß eine solche Anlage der ebenen Flächen des Schlüssels an dem Befestigungselement vermieden wird, können sich in einem kleinen Kontaktbereich hohe mechanische Spannungsspitzen ausbilden, die sich ungünstig auf die Lebensdauer der Schraube und/oder des Schlüssels auswirken.

Beim Drehen eines Maschinenelementes mit einem bekannten Kraftangriff der beschriebenen Art verkantet sich das Werkzeug in dem axialen Loch des Maschinenelementes, so daß die Arbeitsflächen des Werkzeugs nicht vollständig im Loch des Maschinenelementes anliegen. Die Verkantung ist umso größer je mehr das Werkzeug durch toleranzbedingtes Untermaß von seinem Nennmaß abweicht. Infolgedessen kommt es in diesem Bereich bei der Drehmomentübertragung zu einer Konzentration der mechanischen Spannungen und dem Auftreten von Spannungsspitzen. Diese Spannungen führen oft sehr schnell zur Beschädigung des Maschinenelementes und/oder des Werkzeugs, da sie Werte annehmen können, die im Bereich der Streckgrenze des Materials liegen. Ähnliches ist auch beim weiter entfernt liegenden Gegenstand der GB-A-2 061 439 der Fall.

Vor allem treten beim Einsatz maschineller Schrauber Beschädigungen an den Angriffsflächen von Schrauben auf. Wenn die Schraube mit einer Korrosionsschutzschicht überzogen ist, kann diese zumindest teilweise zerstört werden und wird damit unwirksam. Beschädigungen am Werkzeug treten in ungünstigen Fällen beim maschinellen Verschrauben teilweise so schnell ein, daß die Standzeit eines solchen Werkzeuges unter 1000 Verschraubungen liegt. Durch das toleranzbedingte Spiel des Werkzeugs in dem axialen Loch des Maschinenelementes kann es nach einer kurzen Beanspruchungszeit des Werkstoffes zu einem Durchdrehen des Werkzeugs kommen.

Aus der DE-A-24 43 719 ist eine, insbesondere aus einem Werkzeug und einem Maschinenelement bestehende, Drehmomentenübertragungseinheit bekannt geworden, bei der zur Verbesserung der Kontaktausbildung beim Verschrauben an einem Teil (entweder Werkzeug oder Maschinenelement) eine aus einer Vielzahl von gleich großen konvex gekrümmten Flächen bestehende Oberflächenausbildung der Axialkontur vorgesehen ist, wobei die konvex gekrümmten Flächen parallel zu der und symmetrisch um die Mittelachse des Teiles angeordnet sind. Bei einem Maschinenelement, wie einer Schraube mit in einem axialen Loch oder an einer Außenkontur liegenden Angriffsflächen für ein Werkzeug, können sich die konvexen Flächen radial nach innen bzw. nach außen erstrecken. Insbesondere ist dabei für die jeweilige konvexe Fläche eine kreisförmige Krümmung vorgesehen. Wie aber schon in der genannten Patentanmeldung selbst ausgeführt wird, kann auch bei dieser Ausführung nicht immer ausgeschlossen werden, daß die Werkzeugkanten beim Aufbringen eines Drehmomentes gegen die Angriffsfläche des Maschinenelementes (in den beschriebenen Fällen Steckschlüssel oder Maulschlüssel) gepreßt werden. Zwar ist bei der aus der DE-A-24 43 719 bekannten Drehmomentenübertragungseinheit deswegen ein bestimmter Krümmungsradius für die kreisbogenförmige konvexe Angriffsfläche gefordert worden, jedoch ist diese Forderung unzureichend, da beispielsweise bei Einschraubwerkzeugen zulässige Untermaßtoleranzen keine Berücksichtigung gefunden haben. Eine quantifizierende Beschreibung der beim Schraubvorgang auftretenden Prozesse, wie von möglichen Abplattungsvorgängen oder von auftretenden mechanischen Spannungen, enthält das Dokument nicht.

Ausgehend von diesem Stand der Technik liegt der Erfindung die Aufgabe zugrunde, einen Kraftangriff zur Drehmomentübertragung der eingangs beschriebenen Art in Bezug auf sein Zusammenwirken mit einem Werkzeug günstiger auszubilden, so daß bei der Drehmomentübertragung die Gefahr von Beschädigungen verringert wird. Das Maschinenelement soll dabei möglichst aufwandsarm herstellbar sein.

Die Aufgabe der Erfindung wird dadurch gelöst, daß die konvexe Krümmung der Angriffsfläche derart ausgebildet ist, daß die Kanten des Werkzeugs beim Verdrehen des Werkzeugs um seine Längsachse außerhalb eines Hertzschen Abplattungsbereiches der Angriffsflächen des Maschinenelementes für das Werkzeug liegen, wobei das Werkzeug einen in einem Toleranzbereich liegenden Abstand der beiden Arbeitsflächen zueinander aufweist und die konvexe Krümmung $R_S$ der Angriffsfläche derart ausgebildet ist, daß sich beim Verdrehen des Werkzeugs um seine Längsachse unter der Wirkung einer Normalkraft $F_N$ eine Abplattung A gemäß der Gleichung

$$A \geq 1{,}076 \sqrt{\frac{F_N R_S}{EL}} \qquad (1)$$

mit E als einem mittleren Elastizitätsmodul und L als einer axialen Länge des Anlagebereichs der Kanten des Werkzeugs an den Angriffsflächen des Maschinenelements ergibt und eine maximale Flächenpressung

$$\sigma_{max} \leq 0{,}418 \sqrt{\frac{F_N E}{LR_S}} \qquad (2)$$

vorliegt, die im wesentlichen unabhängig vom Abstand der Arbeitsflächen ist.

Wenn ein Drehmoment über einen erfindungsgemäßen Kraftangriff von einem Werkzeug auf ein Maschinenelement übertragen werden soll, wenn z.B. eine Schraube angezogen/gelöst werden soll, wird das Werkzeug z.B. in das axiale Loch eingeführt und verdreht. Durch die erfindungsgemäße Krümmung der Angriffsfläche des Maschinenelementes kommt die Kante des Werkzeugs weder zu Beginn noch während der Drehmomentenübertragung an der Angriffsfläche des Maschinenelementes zur Anlage, sondern nur ein definiert von der Kante des Werkzeugs entfernt liegender Bereich seiner Arbeitsfläche.

Weder die Ausbildung der Kante des Werkzeugs, noch der normgemäß innerhalb eines Toleranzbereiches liegende Abstand der Arbeitsflächen des Werkzeugs haben damit einen Einfluß auf die sich an der Berührungsstelle ausbildenden Druckspannungen. Die dabei zwischen Werkzeug und Schraube auftretenden Kontaktverhältnisse lassen sich mit Hilfe der Hertzschen Gleichungen beschreiben, wenn Werkzeug und Maschinenelement als zwei elastische Körper aufgefaßt werden. Auf Gestalt und Größe der Pressungsfläche (Abplattung) sowie auf die Größe und Verteilung der entstehenden Druckspannungen, z.B. auf die Berechnung der auftretenden Maximalspannungen, sind die Hertzschen Gleichungen anwendbar (Hertz, H.: Über die Berührung fester elastischer Körper.- In: Journal für reine und angewandte Mathematik (Crelle).- Berlin 92 (1881).- S.155 ff.). Diese Gleichungen sind elliptische Integrale erster Art und wurden unter Zugrundelegung der strengen Elastizitätstheorie bestimmt. Für die Berechnung von Sonderfällen der Berührung bestimmter Körper mit konvex, eben oder konkav ausgebildeten Oberflächen, wie Kugel gegen Platte, Zylinder gegen Zylinder usw., wurden aus der Hertzschen Theorie spezielle Berechnungsformeln abgeleitet wobei im vorliegenden Fall an der Berührungsstelle in erster Näherung ein Kontakt Zylinder gegen Ebene auftritt. Der Zylinder ist dabei erfindungsgemäß die Angriffsfläche des Maschinenelementes und die Ebene ist die Arbeitsfläche des Werkzeugs, so daß die oben aufgeführte Formel (2) Gültigkeit besitzt.

Wie bereits erwähnt ist dabei $F_N$ die Normalkraft, mit der das Werkzeug gegen die Angriffsfläche der Schraube gedrückt wird, und L die axiale Länge des Anlagebereichs der Werkzeugkante über die Tiefe der Axialkontur, wie des axialen Loches. E ist ein mittlerer Wert des Elastizitätsmoduls. $R_S$ ist ein Maß für die konvexe Krümmung der Angriffsfläche des Maschinenelementes. Dieses Krümmungsmaß $R_S$ kann erfindungsgemäß um ein Vielfaches größer ausgebildet sein als der Krümmungsradius an der Werkzeugkante, wodurch die an der Berührungsstelle auftretenden Maximalspannungen $\sigma_{max}$ sehr viel kleiner sind als die bei einer bekannten Schraube. Vorzugsweise kann das Krümmungsmaß $R_S$ der Angriffsfläche in der Größe des Kantennennmaßes, d.h. des Abstandes zwischen einander gegenüberliegenden Kanten des Werkzeugs, gewählt werden.

Die Größe der Abplattung A ergibt sich bei metallischen Werkstoffen für Werkzeug und Maschinenelement entsprechend der obigen Gleichung (1). Da das Krümmungsmaß $R_S$ der Angriffsfläche des Maschinenelementes einen im Verhältnis zur Rundung einer Werkzeugkante großen Wert annehmen kann, ergibt sich in diesem Fall vorteilhafterweise eine große Abplattung A, d.h. im speziellen Fall eine große Kontaktfläche zwischen der Arbeitsfläche des Werkzeugs und der Angriffsfläche der Schraube. Die Gefahr des Auftretens von Beschädigungen an der Angriffsfläche der Schraube ist damit nahezu ausgeschlossen.

Außerdem ist zu beachten, daß das Krümmungsmaß $R_S$ der Angriffsfläche des Maschinenelementes infolge der Abplattung bei der Drehmomentenübertragung ändert, so daß in den Gleichungen (1) und (2) ein sich zeitlich bzw. belastungsabhängig änderndes Krümmungsmaß $R_S$ Beachtung finden muß, was bei der quantitativen Bestimmung der Maximalspannung $\sigma_{max}$ und der Abplattung A jeweils zu einer Differentialgleichung führt. Unter Berücksichtigung der jeweilen Randbedingungen können die Art der notwendigen Änderung des Krümmungsmaßes $R_S$ bei Belastung und damit konkrete Werte für die erfindungsgemäße konvexe Krümmung der Angriffsfläche des Maschinenelementes bestimmt werden. Dabei ist erfindungsgemäß ein solcher Kraftangriff vorgesehen, bei dem die konvexe Krümmung $R_S$ der Angriffsfläche des Maschinenelementes für das Werkzeug derart ausgebildet ist, daß sich beim Verdrehen des Werkzeugs um seine Längsachse unter der Wirkung einer Normalkraft $F_N$ gemäß Gleichung (1) die Abplattung A und die maximale Flächenpressung $\sigma_{max}$ gemäß Gleichung (2) einstellen, wobei letztere im wesentlichen unabhängig vom Abstand D der Arbeitsflächen des Werkzeugs ist.

Des weiteren ist eine auch konvexe Krümmung $R_S$ der Angriffsfläche besonders vorteilhaft, durch die beim Verdrehen des Werkzeugs um seine Längsachse unter der Wirkung des zu übertragenden Drehmomentes $M_H$ eine Schubspannung $\tau_{max}$ gemäß der Gleichung

$$\tau_{max} = \frac{|\sigma_{max} - \sigma_{min}|}{2} \qquad (3)$$

vorliegt, die im wesentlichen unabhängig vom Abstand der Arbeitsflächen des Werzeugs ist. $\sigma_{max}$ und $\sigma_{min}$ sind dabei jeweils die in einem mehrachsigen Spannungszustand auftretende größte und kleinste Hauptspannung.

Die Vorteilhatfigkeit einer solchen erfindungsgemäßen konvexen Krümmung $R_S$ läßt sich durch Anwendung der Schubspannungshypothese von Tresca nachweisen. Diese geht von der Vorstellung aus, daß plastische Formänderungen als Schiebungen erfolgen, die durch Schubspannungen ausgelöst werden, und gestattet es, eine auf den einachsigen Spannungszustand bezogene Vergleichsspannung $\sigma_V$ zu errechnen, welche dann als maßgebend für die Beanspruchung des Werkstoffes gilt. Sobald die Vergleichsspannung $\sigma_V$ einen charakteristischen Festigkeitskennwert für den einachsigen Spannungszustand (im vorliegenden Fall den doppelten Wert einer kritischen Schubspannnug $\tau_K$) erreicht, tritt der Versagensfall ein. Für die Vergleichsspannung $\sigma_V$ gilt beim Auftreten von Flächenpressungen und unter Berücksichtigung des Mohrschen Spannungskreises für den mehrachsigem Spannungszustand

$$\sigma_V = |\sigma_{max} - \sigma_{min}| = 2\tau_{max} \qquad (4)$$

Die Vergleichsspannung $\sigma_V$ ist demnach in diesem Fall gleich der doppelten größten Schubspannung $\tau_{max}$, und die größte auftretende Schubspannung $\tau_{max}$ ist mit der kritischen Schubspannung $\tau_{max}$ zu vergleichen.

Weitere vorteilhafte Ausgestaltungsmerkmale der Erfindung sind in den Unteransprüchen sowie der folgenden Beschreibung enthalten.

Anhand mehrerer in der Zeichnung dargestellter, bevorzugter Ausführungsbeispiele soll im folgenden die Erfindung näher erläutert werden. Dabei zeigen:

Fig. 1 im Querschnitt, eine vergrößerte Darstellung eines ersten Ausführungsbeispiels eines erfindungsgemäßen Kraftangriffs an einer Schraube, mit einem Werkzeug zum Anziehen und Lösen der Schraube,

Fig. 2 im Querschnitt, eine vergrößerte Darstellung eines Kraftangriffs an einer Schraube mit einem Werkzeug zum Anziehen und Lösen der Schraube, zur Veranschaulichung der bei einem bestimmten Verdrehwinkel des Werkzeugs auftretenden Kräfte,

Fig. 3 ein Detail eines zweiten Ausführungsbeispiels in einer Darstellung in einem gegenüber Fig. 1 vergrößertem Maßstab,

Fig. 4 eine Fig. 3 entsprechende Darstellung eines dritten Ausführungsbeispiels eines erfindungsgemäßen Kraftangriffs an einer Schraube.

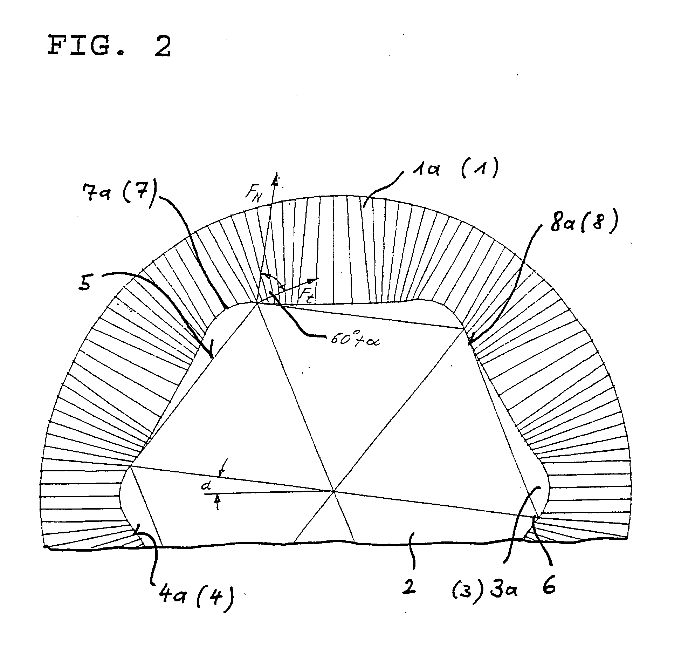

In den verschiedenen Figuren der Zeichnung sind gleiche Teile mit denselben Bezugzeichen versehen, so daß sie in der Regel auch jeweils nur einmal beschrieben werden. Für das nachfolgend dargestellte Vergleichsbeispiel sind in Fig. 2 einander entsprechende Teile jeweils durch den Zusatz "a" zur Bezugsziffer gekennzeichnet.

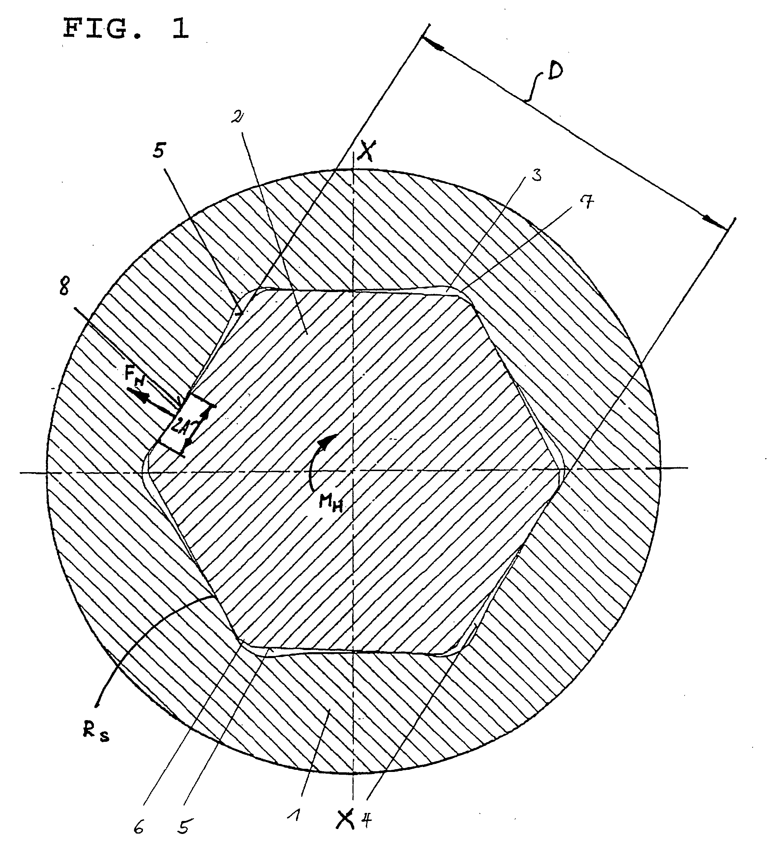

Wie Fig. 1 zeigt, besitzt eine erste Ausführung eines erfindungsgemäßen Kraftangriffs an einer Schraube 1 für das Zusammenwirken mit einem Werkzeug 2 sechs in einem axialen Loch 3 liegende Angriffsflächen 4. Es handelt sich um eine Innensechskant-Schraube. Das Werkzeug 2 ist ein SechskantSchlüssel mit sechs ebenen Arbeitsflächen 5, die aneinandergrenzen und so sechs Kanten 6 bilden. In dem ersten Ausführungsbeispiel sind, wie Fig. 1 zeigt, die Kanten 6 des Werkzeugs 2 abgerundet, bei den weiteren, in den übrigen Figuren gezeigten Ausführungsbeispielen nicht. Bei der Schraube 1 weisen die Angriffsflächen 4 im Bereich von axial gerichteten Lochkanten 7 konkave Krümmungen auf.

Das Werkzeug 2 ist innerhalb des axialen Loches 3 der Schraube 1 in einer um seine Längsachse verdrehten Stellung dargestellt. Die Längsachsen sowohl der Schraube 1 als auch des Werkzeugs 2 verlaufen dabei senkrecht zur Darstellungsebene. Die Angriffsflächen 5 der Schraube 1 weisen eine derart konvexe Krümmung $R_S$ auf, daß beim Verdrehen des Werkzeugs 2 um seine Längsachse innerhalb des Loches 3 die Querschnittskonturen der Arbeitsflächen 5 die Querschnittskonturen der Angriffsfläche 4 der Schraube außerhalb des Bereichs der Kanten 6 berühren. Zu Beginn eines Drehens der Schraube handelt es sich dabei um eine tangentiale Berührung der Konturen der Angriffsflächen 4 und der Arbeitsflächen 5, d.h. um eine Berührung in einem Punkt.

Durch die bei der Übertragung des Moments $M_H$ auftretende Normalkraft $F_N$ beim Anziehen oder Lösen der Schraube 1 wird die Berührung der Konturen der Angriffsflächen 4 und der Arbeitsflächen 5 infolge der auftretenden Abplattung A zu einer linienförmigen Berührung. Dabei bildet sich über eine (aus den Figuren nicht ersichtliche) sich senkrecht zur Darstellungsebene über die Tiefe des axialen Loches 3 erstreckende Länge L zwischen der Arbeitsfläche 5 an der Angriffsfläche 4 in einen Bereich 8 eine Kontaktfläche aus.

Erfindungsgemäß ist die konvexe Krümmung $R_S$ der Angriffsflächen 4 dabei so, daß die Kanten 6 des Werkzeugs 2 beim Verdrehen des Werkzeugs 2 um seine Längsachse innerhalb des Loches 3 außerhalb des Abplattungsbereiches 2A der Angriffsflächen 4 liegen. In diesem Fall kommt es mit Vorteil zu keinem Zeitpunkt der Momentenübertragung infolge der Normalkraft $F_N$ zum Anziehen oder Lösen der Schraube 1 zu einer Berührung der Kanten 6 des Werkzeuges 2 mit den Angriffsflächen 4 der Schraube 1. Die konvexe Krümmung $R_S$ der Angriffsflächen 4 der Schraube 1 kann dabei unterschiedlich ausgebildet sein, so als Abschnitt einer Ellipse, deren große Halbachsen sich dabei vorzugsweise parallel zu einer gedachten Ebene zwischen zwei nebeneinanderliegenden Kanten 7 des Loches 3 erstrekken.

Für die sich im Kontaktbereich 8 zwischen der Arbeitsfläche 5 des Werkzeugs 2 und der Angriffsfläche 4 (bzw. 4a) der Schraube 1 (bzw. 1a) ausbildenden maximalen Normalspannungen $\sigma_{max}$ ist der Einfluß der Abmessungstoleranzen (gegenseitiger Abstand der Arbeitsflächen 5) des Werkzeugs 2 auf die sich durch einen Verdrehwinkel $\alpha$ des Werkzeugs 2 in dem Loch 3 der Schraube 1 in unterschiedlicher Höhe einstellenden Normalkräfte $F_N$ von Bedeutung. Dieser Einfluß wird aus Fig. 2 und den nachstehenden Erläuterungen deutlich. Bei gleichbleibendem Anzugsmoment $M_H$ des Werkzeugs 2 und damit konstanter Tangentialkraft $F_t$ nimmt, wie Fig. 2 veranschaulicht, mit ansteigendem Verdrehwinkel $\alpha$ die Normalkraft $F_N$ entsprechend folgender Gleichung zu

$$(5) \qquad F_N = \frac{F_t}{\cos(\alpha + 60°)}$$

Exemplarisch wurde der Verdrehwinkel $\alpha$ bei Verwendung eines Sechskants mit Nennmaß D und innerhalb des zulässigen Toleranzbereiches liegendem Untermaß für den Abstand der Arbeitsflächen 5 gemessen.

Hieraus ergab sich bei einem bekannten Profil der Schraube 1a mit gerader Ausbildung der Arbeitsflächen 4a bei Untermaß ein Verdrehwinkel $\alpha$, der zu einem Anstieg der Normalkraft $F_N$ um 15 Prozent gegenüber dem Nennmaß führte. Beim erfindungsgemäßen Profil der Schraube 1 ergab sich ein größerer Verdrehwinkel $\alpha$. Dieser führte bei Untermaß zu einem Anstieg der Normalkraft $F_N$ um 24 Prozent. Durch die sich unter der Wirkung einer größeren Normalkraft $F_N$ aufgrund der erfindungsgemäßen Ausbildung der konvexen Kontur $R_S$ der Angriffsfläche stärker vergrößernde Kontaktfläche zwischen der Arbeitsfläche 5 des Werkzeugs 2 und der Angriffsfläche 4 der Schraube 1 blieben die sich ausbildenden maximalen Normalspannungen $\sigma_{max}$ bei dem erfindungsgemäßen Kraftangriff trotz höherer Normalkraft $F_N$ auf vergleichsweise niedrigerem Niveau.

Es zeigte sich auch, daß der Bereich 8 der Krafteinleitung bei dem erfindungsgemäßen Profil weiter von der Kante 6 des Werkzeugs 2 entfernt lag als der Bereich 8a der Krafteinleitung bei dem untersuchten Vergleichsprofil. Dadurch wird die Kante 6 des Werkzeugs 2 geschont, und es ist eine längere Standzeit des Werkzeugs 2 zu erwarten.

Das erfindungsgemäße Profil $R_S$ war des weiteren so ausgebildet, daß die Lage eines mittleren Kontaktpunktes im Bereich 8 der Krafteinleitung unabhängig von der Belastung ist. Bei zunehmender Belastung der Schraube 1 vergrößerte sich zwar die Länge 2A der Kontaktzone (Bereich 8) durch Abplattung, jedoch blieb die Mittenlage des Bereiches 8 der Krafteinleitung nahezu unverändert.

Die Abmessungstoleranzen des Werkzeugs 2 beeinflußten die Lage der Kontaktzone (Bereich 8) auf der Arbeitsfläche 5 des Werkzeugs 2 beim erfindungsgemäßen Profil dergestalt, daß sich bei einem Übergang vom Nennmaß D zum Kleinstmaß die Kontaktzone geringfügig zur gefährdeten Werkzeugkante 6 hin verschob. Beim Vergleichsprofil war stattdessen keine Verschiebung zu beobachten, da das Werkzeug 2 ungünstigerweise immer zuerst mit seiner äußeren Kante 6 an der Angriffsfläche 4 der Schraube 1 in Kontakt kam.

Bei dem Vergleichsprofil wurde eine kleinere und durch höhere mechanische Spannungen beeinflußte Zone beobachtet, während beim erfindungsgemäßen Profil die Verhältnisse umgekehrt lagen. Es findet sich eine größere spannungsbeeinflußte Zone der Schraube 1 mit kleineren Spannungsspitzen. Dies ist auf eine größere Kontaktlänge 2A im Bereich 8 der Krafteinleitung zurückzuführen. Die beim erfindungsgemäßen Profil generell größere Kontaktlänge 2A führte zu geringeren Flächenpressungen zwischen der Angriffsfläche 4 der Schraube und der Arbeitsfläche 5 des Werkzeugs 2. Die Kontaktlänge 2A nahm mit zunehmender Belastung sowohl bei der erfindungsgemäßen Ausführung als auch bei der Vergleichsausführung degressiv zu. Stellt man sich diese Spannungsverläufe als topografische Gebilde vor, so würde die Aufnahme des Vergleichsprofils jedoch einen stärkeren Anstieg des Spannungsgradienten zeigen. Beim erfindungsgemäßen Profil liegt dagegen ein flacher verlaufender Spannungsgradient vor, was auf eine geringere Beanspruchung des Werkstoffes hindeutet.

Bei der Bestimmung der Abhängigkeit der Schubspannung $\tau_{max}$ in der Kontaktzone 8 (bzw. 8a) vom Belastungsmoment ergaben sich beim Vergleichsprofil hohe Schubspannungen, die zu elastischen und plastischen Verformungen führen können. Insbesondere beim wiederholten Aufbringen eines Anzugsmomentes $M_H$ sind im Kopf der Schraube 1a bleibende Verformungen zu erwarten.

Beim erfindungsgemäßen Profil ist die konvexe Krümmung $R_S$ der Angriffsfläche 4 des weiteren auch derart ausgebildet, daß beim Verdrehen des Werkzeugs 2 um seine Längsachse unter der Wirkung des zu übertragenden Drehmomentes $M_H$ die Schubspannung $\tau_{max}$ gemäß der Gleichung (3) im wesentlichen unabhängig vom Abstand D der Arbeitsflächen 5 ist. Für jeweils gleiche Abstände D lagen dabei die maximal auftretenden Schubspannungen $\tau_{max}$ deutlich (etwa um ein Drittel bis um etwa die Hälfte) niedriger als bei der Vergleichsausführung.

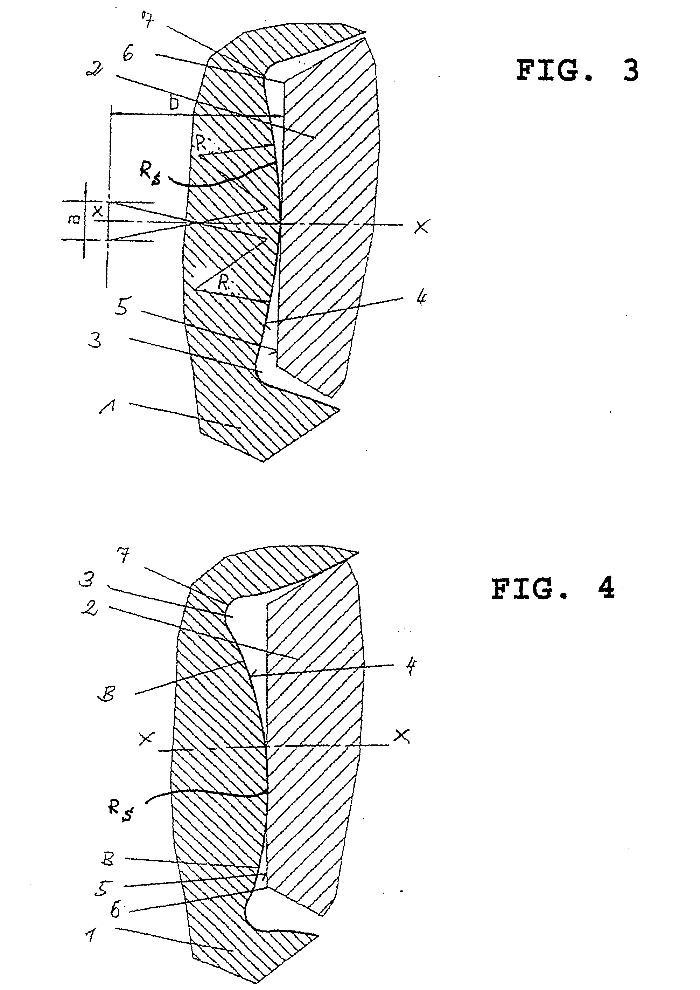

Fig. 3 zeigt ein zweites Ausführungsbeispiel der Erfindung, bei dem die konvexe Krümmung $R_S$ einer Angriffsfläche 4 einer mit dem erfindungsgemäßen Kraftangriff versehenen Schraube 1 aus mehreren Abschnitten zusammengesetzt ist. Die konvexe Krümmung $R_S$ der dargestellten Angriffsfläche 4 für das Werkzeug 2 läßt sich durch zwei Kreisbogenabschnitte mit den jeweiligen Radien R beschreiben, die von seitlichen parallel zur Längsachse des Loches 3 liegenden Bereichen der Angriffsfläche 4 ausgehen und deren Mittelpunkte im Abstand b längs der Angriffsfläche 4 um eine Versetzungslänge a zueinander verschoben sind. Die beiden Kreisbogenabschnitte stoßen auf der Mittelachse X-X der Angriffsfläche 4 aufeinander. Durch die vom mittleren zum äußeren Bereich der Angriffsfläche 4 gegenüber der Arbeitsfläche 5 des Werkzeugs 2 zurückweichende Kontur der Angriffsfläche 4 der erfindungsgemäßen Schraube 1 ist diese auch bei Belastung durch ein hohes Moment $M_H$ wirksam vor Beschädigungen durch die Werkzeugkanten 6 geschützt. Die sich beim Anziehen und Lösen ausbildende Kontaktfläche zwischen der Angriffsfläche 4 und der Arbeitsfläche 5 des Werkzeugs 2 vergrößert sich dabei vorteilhafterweise wie bei der ersten Ausführung mit zunehmender Normalkraft $F_N$ und die auftretenden maximalen Spannungen $\sigma_{max}$ bleiben gering.

Die Kontur der Angriffsfläche 4 der Schraube 1 ist hinsichtlich der Mittelachse X-X der Angriffsfläche 4 symmetrisch ausgebildet. Jeweils eine Angriffsfläche 4 und eine Arbeitsfläche 5 des Werkzeugs 2 berühren sich beim Verdrehen des Werkzeugs 2 um seine Längsachse innerhalb des Loches 3 im mittleren Bereich zwischen benachbarten axial gerichteten Lochkanten 7. Diese symmetrische Ausbildung ist deswegen von Vorteil, weil dadurch beim Anziehen der Schraube 1 im Hinblick auf den Kontakt mit den Arbeitsflächen 5 des Werkzeugs 2 die gleichen, unter dem Aspekt des Schutzes vor Beschädigungen günstigen Verhältnisse entstehen wie beim Lösen der Schraube 1.

Das in Fig. 4 gezeigte dritte Ausführungsbeispiel zeichnet sich dadurch aus, daß die konvexe Krümmung $R_S$ der dargestellten Angriffsfläche 4 für das Werkzeug 2 durch zwei, durch jeweils eine Exponentialfunktion $y=a^x$ darstellbare bogenförmige Abschnitte B beschrieben ist, die von den seitlichen parallel zur Längsachse des Loches 3 liegenden Bereichen der Angriffsfläche 4 ausgehen. Das dritte Ausführungsbeispiel gleicht dem zweiten Ausführungsbeispiel insofern, als die beiden bogenförmigen Abschnitte B auf der Mittelachse X-X der Angriffsfläche 4 aufeinanderstoßen, und damit eine symmetrische Kontur der Angriffsfläche 4 vorliegt. Dieses Beispiel veranschaulicht insbesondere, daß die Kontur der Angriffsfläche 4 der beim Anziehen und Lösen der Schraube auftretenden Abplattung A in geeigneter Weise derart angepaßt werden kann, daß sich die zwischen der Arbeitsfläche 5 des Werkzeugs 2 und der Angriffsfläche 4 der Schraube 1 ausbildende Kontaktlänge noch größer als der oben erwähnte Wert 2A mit A bei statischer Betrachtungsweise nach Gleichung (1) für den Sonderfall Zylinder gegen Ebene wird. Die auftretenden Maximalspannungen $\sigma_{max}$ sind dann vorteilhafterweise kleiner als die nach Gleichung (2) berechneten, da die sich ausbildende Kontaktfläche zwischen der Arbeitsfläche 5 des Werkzeugs 2 und der Angriffsfläche 4 der Schraube 1 mit steigender Normalkraft $F_N$ stärker zunimmt als bei einem Kontakt Zylinder gegen Ebene.

Außerdem findet bei der dritten Ausführung die dynamische Betrachtungsweise Beachtung, wonach sich das Krümmungsmaß $R_S$ der Angriffsfläche 4 des Maschinenelementes infolge der Abplattung A während der Drehmomentenübertragung ändert. Die Funktion $y=a^x$ stellt dabei eine allgemeine Näherungslösung einer Differentialgleichung für ein sich in den Gleichungen (1) und (2) zeitlich bzw. belastungsabhängig änderndes Krümmungsmaß $R_S$ dar, wobei die sich infolge des unterschiedlichen Abstands D der Arbeitsflächen 5 ändernde Normalkraft $F_N$ berücksichtigt werden kann.

Die Erfindung ist nicht auf die beschriebenen Beispiele beschränkt, sondern umfaßt auch alle im Sinne der Erfindung gleichwirkenden Ausführungen, wie konvexe Krümmungen $R_S$ der Angriffsflächen 4 des Maschinenelementes die von den vorstehend genannten abweichen. Es können auch weitere Maßnahmen zum Schutz gegen Beschädigungen vorgesehen sein, wie eine spezielle Dimensionierung der bereits genannten konkaven Krümmungen der axial gerichteten Lochkanten 7 der Angriffsflächen 4 des Maschinenelementes. Vorteilhafterweise können in dem erfindungsgemäßen Kraftangriff genormte, ebene Arbeitsflächen 5 aufweisende Werkzeuge 2 zum Einsatz kommen. Über die Längenausdehnung L des axialen Loches 3 ist keine Änderung der Lochkontur vonnöten, da allein durch die Gestaltung der Angriffsflächen 4 des Maschinenelementes in einer Ebene die gewünschten Verbesserungen erreicht werden, wodurch sich auch die Möglichkeit einer aufwandsarmen Fertigung ergibt.

Bezugszeichen

| | |
|---|---|
| 1 | Schraube (erfindungsgemäß) |
| 1a | Schraube (Vergleichsbeispiel) |
| 2 | Werkzeug |
| 3 | Loch von 1 |
| 3a | Loch von 1a |
| 4 | Angriffsfläche von 1 für 2 |
| 4a | Angriffsfläche von 1a für 2 |
| 5 | Arbeitsfläche von 2 für 1 |
| 6 | Kante von 2 |
| 7 | Lochkante von 1 |
| 7a | Lochkante von 1a |
| 8 | Bereich der Krafteinleitung, Kontaktzone von 1 |
| 8a | Bereich der Krafteinleitung, Kontaktzone von 1a |
| A | Abplattung |
| a | Versetzungslänge |
| B | Bogenabschnitt |
| b | Verschiebungsabstand |
| D | Abstand zwischen zwei Arbeitsflächen 5 von 2 |
| E | mittlerer Elastizitätsmodul |
| $F_N$ | Normalkraft |
| $F_t$ | Tangentialkraft |
| L | Kontaktlänge in 3 |
| $M_H$ | statisches Torsionsmoment |
| R | Radius |
| $R_S$ | konvexe Kontur, Krümmungsmaß von 4 |
| X-X | Mittelachse von 4 |
| $\alpha$ | Verdrehwinkel von 2 in 3 |
| $\sigma_{max}$ | Maximal Spannung |
| $\sigma_{min}$ | Minimalspannung |
| $\sigma_v$ | Vergleichsspannung |
| $\tau_{max}$ | maximale Hauptschubspannung |
| $\tau_k$ | kritische Schubspannung bei einachsiger Beanspruchung |

**Patentansprüche**

1. Kraftangriff zur Drehmomentübertragung, bestehend aus mindestens zwei, an einer Axialkontur, wie in einem axialen Loch (3) eines Maschinenelementes (1) liegenden Angriffsflächen (4) für ein Werkzeug (2), die zum Zusammenwirken mit jeweils einer ebenen Arbeitsfläche (5) des mehrere Kanten (6) aufweisenden Werkzeugs (2) bestimmt sind, wobei mindestens eine Angriffsfläche (4) des Maschinenelementes (1) eine derartige konvexe Krümmung ($R_S$) besitzt, daß beim Verdrehen des Werkzeugs (2) um seine Längsachse unter der Wirkung des zu übertragenden Drehmomentes ($M_H$) die Querschnittskontur mindestens einer Arbeitsfläche (5) die Querschnittskontur der Angriffsfläche (4) außerhalb des Bereichs der Kanten (6) des Werkzeugs (2) mindestens tangential berührt, wobei im wesentlichen ein Kontakt Zylinder gegen Ebene auftritt, bei dem der Zylinder durch die Angriffsfläche (4) des Maschinenelementes (1) und die Ebene durch die Arbeitsfläche (5) des Werkzeugs gebildet sind,

   **dadurch gekennzeichnet, daß** die konvexe Krümmung ($R_S$) der Angriffsfläche (4) derart ausgebildet ist, daß die Kanten (6) des Werkzeugs (2) beim Verdrehen des Werkzeugs (2) um seine Längsachse außerhalb eines Hertzschen Abplattungsbereiches (2A) der Angriffsflächen (4) des Maschinenelementes (1) für das Werkzeug (2) liegen, wobei das Werkzeug (2) einen in einem Toleranzbereich liegenden Abstand (D) der beiden Arbeitsflächen (5) zueinander aufweist und die konvexe Krümmung

($R_S$) der Angriffsfläche (4) derart ausgebildet ist, daß sich beim Verdrehen des Werkzeugs (2) um seine Längsachse unter der Wirkung einer Normalkraft ($F_N$) eine Abplattung (A) gemäß der Gleichung

$$A \geq 1{,}076 \sqrt{\frac{F_N R_S}{EL}}$$

mit E als einem mittleren Elastizitätsmodul und L als einer axialen Länge des Anlagebereichs der Kanten (6) des Werkzeugs (2) an den Angriffsflächen (4) des Maschinenelements (3) ergibt und eine maximale Flächenpressung

$$\sigma_{max} \leq 0{,}418 \sqrt{\frac{F_N E}{LR_S}}$$

vorliegt, die im wesentlichen unabhängig vom Abstand (D) der Arbeitsflächen (5) ist.

2. Kraftangriff nach Anspruch 1, **dadurch gekennzeichnet, daß** die konvexe Krümmung ($R_S$) der Angriffsfläche (4) derart ausgebildet ist, daß beim Verdrehen des Werkzeugs (2) um seine Längsachse unter der Wirkung des zu übertragenden Drehmomentes ($M_H$) eine Schubspannung ($\tau_{max}$) gemäß der Gleichung

$$\tau_{max} = \frac{|\sigma_{max} - \sigma_{min}|}{2}$$

mit $\sigma_{max}$ als der größten auftretenden Hauptspannung und $\sigma_{min}$ als der kleinsten auftretenden Hauptspannung in einem mehrachsigen Spannungszustand, vorliegt, die im wesentlichen unabhängig vom Abstand (D) der Arbeitsflächen (5) ist.

3. Kraftangriff nach Anspruch 1 oder 2, **dadurch gekennzeichnet, daß** sich jeweils eine Angriffsfläche (4) und eine Arbeitsfläche (5) des Werkzeugs (2) beim Verdrehen des Werkzeugs (2) um seine Längsachse innerhalb des Loches (3) im mittleren Bereich zwischen benachbarten, axial gerichteten Lochkanten (7) berühren.

4. Kraftangriff nach einem der Ansprüche 1 bis 3, **dadurch gekennzeichnet, daß** die konvexe Krümmung ($R_S$) mindestens einer Angriffsfläche (4) für das Werkzeug (2) durch mindestens einen Ellipsenabschnitt beschrieben ist.

5. Kraftangriff nach einem der Ansprüche 1 bis 3, **dadurch gekennzeichnet, daß** die konvexe Krümmung ($R_S$) mindestens einer Angriffsfläche (4) für das Werkzeug (2) durch zwei Kreisbogenabschnitte beschrieben ist, die von seitlichen parallel zur Längsachse des Loches (3) liegenden Bereichen der Angriffsfläche (4) ausgehen und deren Mittelpunkte längs der Angriffsfläche (4) um eine Versetzungslänge (a) zueinander verschoben sind.

6. Kraftangriff nach einem der Ansprüche 1 bis 3, **dadurch gekennzeichnet, daß** die konvexe Krümmung ($R_S$) mindestens einer Angriffsfläche (4) für das Werkzeug (2) durch zwei durch jeweils eine Exponentialfunktion darstellbare Abschnitte (B) beschrieben ist, die von seitlichen parallel zur Längsachse des Loches (3) liegenden Bereichen der Angriffsfläche (4) ausgehen.

7. Kraftangriff nach einem der Ansprüche 1 bis 6, **dadurch gekennzeichnet, daß** im Bereich einer axial gerichteten Lochkante (7) mindestens eine Angriffsfläche (4) eine konkave Krümmung aufweist.

8. Kraftangriff nach einem der Ansprüche 1 bis 7, **dadurch gekennzeichnet, daß** mindestens zwei gegenüberliegende, vorzugsweise alle, Angriffsflächen (4) die konvexe Krümmung ($R_S$) aufweisen.

9. Kraftangriff nach einem der Ansprüche 1 bis 8, **dadurch gekennzeichnet, daß** das Loch (3) eine viereckige Querschnittskontur aufweist.

10. Kraftangriff nach einem der Ansprüche 1 bis 8, **dadurch gekennzeichnet, daß** das Loch (3) eine sechseckige Querschnittskontur aufweist.

## Claims

1. Force application for torque transmission, consisting of at least two application surfaces (4), lying on an axial contour, such as in an axial hole (3) of a machine element (1), for a tool (2), these application surfaces (4) each being intended for interaction with a respective planar working surface (5) of the tool (2), which has a plurality of edges (6), at least one application surface (4) of the machine element (1) having such a convex curvature ($R_S$) that, when the tool (2) is turned about its longitudinal axis under the effect of the torque ($M_H$) to be transmitted, the cross-sectional contour of at least one working surface (5) touches the cross-sectional contour of the application surface (4) outside the region of the edges (6) of the tool (2) at least tangentially, in the course of which contact of cylinder against plane essentially occurs, during which the cylinder is formed by the application surface (4) of the machine element (1) and the plane is formed by the working surface (5) of the tool, **characterized in that** the convex curvature ($R_S$) of the application surface (4) is designed in such a way that the edges (6) of the tool (2), when the tool (2) is turned about its longitudinal axis, lie outside a Hertzian flattening region (2A) of the application surfaces (4) of the machine element (1) for the tool (2), the two working surfaces (5) of the tool (2) being at a distance (D) from one another within a tolerance range, and the convex curvature ($R_S$) of the application surface (4) being designed in such a way that, when the tool (2) is turned about its longitudinal axis under the effect of a normal force ($F_N$), flattening (A) occurs according to the equation

$$A \geq 1{,}076 \sqrt{\frac{F_N R_S}{EL}}$$

where E is an average modulus of elasticity and L is an axial length of the bearing region of the edges (6) of the tool (2) on the application surfaces (4) of the machine element (1), and there is a maximum surface pressure

$$\sigma_{max} \leq 0{,}418 \sqrt{\frac{F_N E}{LR_S}}$$

which essentially depends on the distance (D) between the working surfaces (5).

2.  Force application according to Claim 1, **characterized in that** the convex curvature ($R_S$) of the application surface (4) is designed in such a way that, when the tool (2) is turned about its longitudinal axis under the effect of the torque ($M_H$) to be transmitted, there is a shear stress ($\tau_{max}$) according to the equation

$$\tau_{max} = \frac{|\sigma_{max} - \sigma_{min}|}{2}$$

where $\sigma_{max}$ is the maximum principal stress occurring and $\sigma_{min}$ is the minimum principal stress occurring in a multi-axis stress state, this shear stress ($\tau_{max}$) essentially depending on the distance (D) between the working surfaces (5).

3.  Force application according to Claim 1 or 2, **characterized in that** in each case an application surface (4) and a working surface (5) of the tool (2), when the tool (2) is turned about its longitudinal axis inside the hole (3), touch one another in the centre region between adjacent, axially directed hole edges (7).

4.  Force application according to one of Claims 1 to 3, **characterized in that** the convex curvature ($R_S$) of a least one application surface (4) for the tool (2) is described by at least one ellipse segment.

5.  Force application according to one of Claims 1 to 3, **characterized in that** the convex curvature ($R_S$) of at least one application surface (4) for the tool (2) is described by two circular arc segments which start from lateral regions, lying parallel to the longitudinal axis of the hole (3), of the application surface (4) and whose centre points are displaced relative to one another by an offset length (a) along the application surface (4).

6.  Force application according to one of Claims 1 to 3, **characterized in that** the convex curvature ($R_S$) of at least one application surface (4) for the tool (2) is described by two sections (B) which can be represented in each case by an exponential function and start from lateral regions, lying parallel to the longitudinal axis of the hole (3), of the application surface (4).

7.  Force application according to one of Claims 1 to 6, **characterized in that** at least one application surface (4) has a concave curvature in the region of an axially directed hole edge (7).

8.  Force application according to one of Claims 1 to 7, **characterized in that** at least two opposite application surfaces (4), preferably all the application surfaces (4), have the convex curvature ($R_S$)

9.  Force application according to one of Claims 1 to 8, **characterized in that** the hole (3) has a square cross-sectional contour.

10. Force application according to one of Claims 1 to 8, **characterized in that** the hole has a hexagonal cross-sectional contour.

**Revendications**

1.  Dispositif d'application de force pour transmission de couple, composé d'au moins deux surfaces d'attaque (4) pour un outil (2), situées sur un profil axial, comme dans un trou axial (3), d'un élément de machine (1), qui sont prévues pour coopérer chacune avec une surface travaillante plane (5) de l'outil (2) qui présente plusieurs arêtes (6), dans lequel au moins une surface d'attaque (4) de l'élément de machine (1) possède une courbure convexe ($R_S$) telle que, lorsqu'on fait tourner l'outil (2) autour de son axe longitudinal, le profil de section d'au moins une surface travaillante (5) touche au moins tangentiellement le profit de section de la surface d'attaque (4) en dehors de la région des arêtes (6) de l'outil (2) sous faction du couple à transmettre ($M_H$), et il se produit alors sensiblement un contact cylindre contre plan dans lequel le cylindre est formé par la surface d'attaque (4) de l'élément de machine (1) et le plan par la surface travaillante (5) de l'outil, **caractérisé en ce que** la courbure convexe (R$_S$) de la surface d'attaque (4) est conformée de manière que, lorsqu'on fait tourner l'outil (2) autour de son axe longitudinal, les arêtes (6) de l'outil (2) se trouvent en dehors d'une région d'aplatissement de Hertz (2A) des surfaces d'attaque (4) de l'élément de machine (1) pour l'outil (2), l'outil (2) présentant une distance d'écartement mutuel (D) des deux surfaces travaillantes (5) qui est comprise dans un intervalle de tolérance et la courbure convexe (R$_S$) des surfaces d'attaque (4) étant conformée de manière que, lorsqu'on fait tourner l'outil (2) autour de son axe longitudinal, il se produit sous faction d'une force normale (F$_N$) un aplatissement (A) indiqué par l'équation

$$A \geq 1{,}076 \sqrt{\frac{F_N R_S}{EL}}$$

où E représente un module d'élasticité moyen et L une longueur axiale de la région d'appui des arêtes (6) de l'outil (2) contre les surfaces d'attaque (4) de l'élément de machine (3) et il s'exerce une pression par unité de surface maximale

$$\sigma_{max} \leq 0{,}418 \sqrt{\frac{F_N E}{LR_S}}$$

qui est sensiblement indépendante de la distance d'écartement (D) des surfaces travaillantes (5).

2. Dispositif d'application de force selon la revendication 1,
**caractérisé en ce que** la courbure convexe (R$_S$) de la surface d'attaque (4) est conformée de telle manière que, lorsqu'on fait tourner l'outil (2) autour de son axe longitudinal, il s'exerce sons faction du couple à transmettre (M$_H$) une contrainte de cisaillement (τ$_{max}$) indiquée par l'équation

$$\tau_{max} = \frac{|\sigma_{max} - \sigma_{min}|}{2}$$

où σ$_{max}$ représente la plus grande contrainte principale exercée et σ$_{min}$ représente la plus petite contrainte principale exercée dans un état de contrainte à plusieurs axes, qui est sensiblement indépendante de la distance d'écartement (D) des surfaces travaillantes (5).

3. Dispositif d'application de force selon la revendication 1 ou 2,
**caractérisé en ce que**, lorsqu'on fait tourner l'outil (2) autour de son axe longitudinal à l'intérieur du trou (3), une surface d'attaque (4) et une surface travaillante (5) de l'outil (2) se touchent à chaque fois dans la région médiane entre des arêtes adjacentes (7) du trou qui sont orientées axialement.

4. Dispositif d'application de force selon une des revendications 1 à 3,
**caractérisé en ce que** la courbure convexe (R$_S$) d'au moins une surface d'attaque (4) pour l'outil (2) est définie par au moins un segment d'ellipse.

5. Dispositif d'application de force selon une des revendications 1 à 3,
**caractérisé en ce que** la courbure convexe (R$_S$) d'au moins une surface d'attaque (4) pour l'outil (2) est définie par deux segments d'arc de cercle qui partent de régions latérales de la surface d'attaque (4) qui s'étendent parallèlement à l'axe longitudinal du trou (3) et dont les centres sont déplacés l'un par rapport à l'autre d'une longueur de décalage (a) le long de la surface d'attaque (4).

6. Dispositif d'application de force selon une des revendications 1 à 3,
**caractérisé en ce que** la courbure convexe (R$_S$) d'au moins une surface d'attaque (4) pour l'outil (2) est définie par deux segments (B) pouvant être représentés chacun par une fonction exponentielle, qui partent de régions latérales de la surface d'attaque (4) qui s'étendent parallèlement à l'axe longitudinal du trou (3).

7. Dispositif d'application de force selon une des revendications 1 à 6,
**caractérisé en ce que**, dans la région d'une arête (7) du trou qui est orientée axialement, au moins une surface d'attaque (4) présente une courbure concave.

8. Dispositif d'application de force selon une des revendications 1 à 7,
**caractérisé en ce qu'**au moins deux surfaces d'attaque (4) opposées et de préférence toutes les surfaces d'attaque présentent la courbure convexe (R$_S$).

9. Dispositif d'application de force selon une des revendications 1 à 8,
**caractérisé en ce que** le trou (3) présente un profil de section quadrangulaire.

10. Dispositif d'application de force selon une des revendications 1 à 8,
**caractérisé en ce que** le trou (3) présente un profil

de section hexagonal.

FIG. 1

FIG. 2

FIG. 3

FIG. 4